# EUROPÄISCHE PATENTSCHRIFT

(11) **EP 1 304 500 B1**
(45) Veröffentlichungstag und Bekanntmachung des Hinweises auf die Patenterteilung: **19.07.2006**
(21) Anmeldenummer: 02450214.8
(22) Anmeldetag: 20.09.2002
(51) Int. Cl.: F16F 15/121, F16D 3/56

(54) **Antriebstrang mit einem Drehschwingungsdämpfer und einer drehelastischen Kupplung**
Driveline having a torsional vibration damper and a torsional elastic coupling
Ligne de transmission avec amortisseur de vibrations de torsion et accouplement torsio-élastique

(30) Priorität: 22.10.2001 AT 16752001
(43) Veröffentlichungstag der Anmeldung: 23.04.2003
(73) Patentinhaber: Ellergon Antriebstechnik GmbH, 5300 Hallwang/Salzburg (AT)
(72) Erfinder: Geislinger, Matthias, 5026 Salzburg (AT)
(74) Vertreter: Hübscher, Helmut

(56) Entgegenhaltungen:
- EP-A- 0 229 215
- AT-B- 405 866
- DE-A- 19 919 458
- DE-U- 8 815 553
- FR-A- 1 351 275
- FR-A- 1 478 353
- US-A- 1 482 095

## Beschreibung

Die Erfindung bezieht sich auf einen Antriebstrang mit einem Drehschwingungsdämpfer und einer drehelastischen Kupplung, wobei der Drehschwingungsdämpfer eine gegenüber einem antriebseitigen Teil federnd abgestützte abtriebseitige Dämpfungsmasse und die drehelastische Kupplung eine gegenüber einem abtriebseitigen Teil federnd abgestützte antriebseitige Dämpfungsmasse aufweisen, und wobei die drehelastische Kupplung und der Drehschwingungsdämpfer zu einer Baueinheit mit einer gemeinsamen, je für sich gegenüber dem antriebseitigen und dem abtriebseitigen Teil federnd abgestützten Dämpfungsmasse für den Drehschwingungsdämpfer und die drehelastische Kupplung zusammengebaut sind. Ein derartiger Antriebsstrang ist aus der DE 88 15 553 U1 bekannt.

Um in Antriebsträngen beispielsweise von Schiffsantrieben Drehschwingungen auf ein zulässiges Maß zu dämpfen, werden einerseits ein Drehschwingungsdämpfer für die mit einem Schwungrad versehene Kurbelwelle des aus einem Verbrennungsmotor bestehenden Antriebs und anderseits eine drehelastische Kupplung eingesetzt, über die die Kurbelwelle mit einem Getriebe zum Antrieb der Propelleranlage verbunden ist. Sowohl der Drehschwingungsdämpfer als auch die drehelastische Kupplung weisen einen Außen- und einen Innenteil auf, zwischen denen radiale Blattfedern zur Drehmomentübertragung angeordnet sind. Die zu Paketen zusammengefaßten Blattfedern werden im Bereich des Außenteiles zwischen Zwischenstücken biegesteif eingespannt und greifen in axiale Nuten des Innenteils ein (AT 405 866 B). Die Zwischenstücke begrenzen mit einer Dämpfungsflüssigkeit gefüllte Kammern, die über einen Drosselstellen ergebenden Ringspalt zwischen den Zwischenstücken und dem Innenteil verbunden sind, so daß es bei einer Relativverdrehung zwischen Innen- und Außenteil aufgrund einer Drehmomentbelastung nicht nur zu einer Vorspannung der Blattfedern, sondern auch zu einer Flüssigkeitsverdrängung zwischen den Kammern und damit zu einer zusätzlichen hydraulischen Relativdämpfung kommt. Der Unterschied zwischen einem Drehschwingungsdämpfer und einer drehelastischen Kupplung muß im wesentlichen in der Auslegung der Drehsteifigkeit, des Relativdämpfungsverhaltens und der abtriebseitigen bzw. antriebseitigen Dämpfungsmasse gesehen werden, welche Parameter an das durch den Antriebstrang gebildete Schwingungssystem anzupassen sind. Obwohl durch den Einsatz solcher Drehschwingungsdämpfer und drehelastischer Kupplungen das Schwingungsverhalten von Antriebsystemen vorteilhaft verbessert werden kann, ergibt sich ein vergleichsweise hoher Konstruktionsaufwand, zumal im allgemeinen der Drehschwingungsdämpfer am einen und die drehelastische Kupplung am anderen Ende der Kurbelwelle angeordnet werden müssen und meist zusätzlich ein Schwungrad nötig ist.

Der Erfindung liegt somit die Aufgabe zugrunde, einen Antriebstrang mit einem Drehschwingungsdämpfer und einer drehelastischen Kupplung der eingangs geschilderten Art so auszugestalten, daß nicht nur der Konstruktionsaufwand erheblich vereinfacht, sondern auch das Schwingungsverhalten des Antriebstranges verbessert werden kann.

Die Erfindung löst die gestellte Aufgabe dadurch, daß der antriebseitige Teil des Drehschwingungsdämpfers und der abtriebseitige Teil der drehelastischen Kupplung einen gemeinsamen Außen- oder Innenteil als Dämpfungsmasse aufweisen, wobei der antriebseitige Teil des Drehschwingungsdämpfers, der abtriebseitige Teil der drehelastischen Kupplung und die gemeinsame Dämpfungsmasse drei konzentrisch angeordnete, durch radiale Blattfedern paarweise miteinander verbundene Teile bilden, und die Blattfedern zwischen dem äußersten und dem innersten Teil den mittleren Teil in Durchtrittsöffnungen durchsetzen.

Durch das im Vergleich zum Antrieb des Antriebstranges kleine Massenträgheitsmoment des antriebseitigen Teiles des Drehschwingungsdämpfers läßt sich im Zusammenwirken mit dem entsprechenden Trägheitsmoment der abtriebseitigen Dämpfungsmasse bei einer angepaßten Abstimmung der Drehsteifigkeit und der Relativdämpfung des Drehschwingungsdämpfers der Antriebstrang auf der Antriebseite hinsichtlich der Drehschwingungen gut dämpfen, so daß mit nur geringen Wechselspannungen in der Kurbelwelle des Verbrennungsmotors gerechnet werden kann. In diesem Zusammenhang ist ja zu bedenken, daß die mit der antriebseitigen Dämpfungsmasse der drehelastischen Kupplung zu einer gemeinsamen Dämpfungsmasse zusammengefaßte abtriebseitige Dämpfungsmasse des Drehschwingungsdämpfers ein vergleichsweise großes Massenträgheitsmoment mit sich bringt. Durch dieses große Trägheitsmoment der dem Drehschwingungsdämpfer und der Kupplung gemeinsamen Dämpfungsmasse wird außerdem eine der Wirkung eines Schwungrades vergleichbare Trennung zwischen dem Schwingungsverhalten des Antriebstranges im Antriebs- und Abtriebsbereich erreicht, wenn die drehelastische Kupplung hinsichtlich ihrer Drehsteifigkeit und ihrer Relativdämpfung entsprechend ausgelegt wird. Dies erfordert im allgemeinen eine deutlich geringere Drehsteifigkeit der drehelastischen Kupplung im Vergleich zum Drehschwingungsdämpfer. Trotz des konstruktiv einfachen Aufbaus, der das Vorsehen eines gesonderten Schwungrades für den Antriebsmotor erübrigt und die Kurbelwelle des Antriebs an einem Ende freigibt, läßt sich der gesamte Antriebstrang hinsichtlich seines Schwingungsverhaltens im Vergleich zu bekannten Antriebsträngen mit gesonderten Einrichtungen zur Drehschwingungsdämpfung der Antriebseite und zur drehelastischen Kupplung der Abtriebseite besser beeinflussen.

Besonders einfache Konstruktionsverhältnisse ergeben sich dadurch, daß der antriebseitige Teil des Drehschwingungsdämpfers und der abtriebseitige Teil der drehelastischen Kupplung einen gemeinsamen Außen- oder Innenteil als Dämpfungsmasse aufweisen. Da der antriebseitige Teil des Drehschwingungsdämpfers, der abtriebseitige Teil der drehelastischen Kupplung und die gemeinsame Dämpfungsmasse drei konzentrisch angeordnete, durch radiale Blattfedern paarweise miteinander verbundene Teile bilden, können die Blattfedern zwischen dem äußersten und dem innersten Teil den mittleren Teil in Durchtrittsöffnungen durchsetzen, was eine gedrängte Bauweise mit einem vergleichsweise geringen Außendurchmesser sicherstellt.

Um bei einer vergleichsweise geringen Gesamtmasse der Baueinheit ein vergleichsweise großes Trägheitsmoment für die sowohl dem Drehschwingungsdämpfer als auch der drehelastischen Kupplung gemeinsamen Dämpfungsmasse zu ermöglichen, werden der Drehschwingungsdämpfer und die Kupplung mit einem gemeinsamen die Dämpfungsmasse bildenden Außenteil versehen. Damit unter dieser Voraussetzung vorteilhafte Konstruktionsbedingungen hinsichtlich der unterschiedlichen Drehsteifigkeit von Drehschwingungsdämpfer und drehelastischer Kupplung vorgegeben werden können, werden der zwischen dem mittleren und dem äußersten Teil gebildete Drehschwingungsdämpfer über den mittleren Teil mit der Antriebseite und die zwischen dem äußersten und dem innersten Teil vorgesehene Kupplung über den innersten Teil mit der Abtriebseite des Antriebstranges verbunden. Durch diese Maßnahme ergibt sich für die Blattfedern der drehelastischen Kupplung eine größere radiale Länge, was der geringeren Drehsteifigkeit der drehelastischen Kupplung gegenüber dem Drehschwingungsdämpfer zugute kommt.

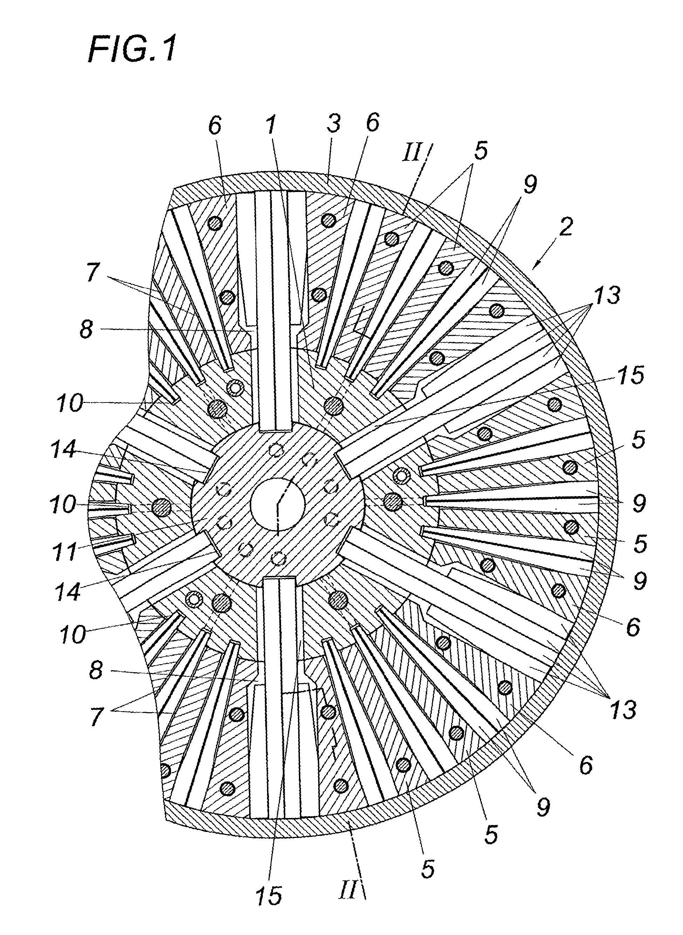

In der Zeichnung ist der Erfindungsgegenstand beispielsweise dargestellt. Es zeigen
- Fig. 1: einen erfindungsgemäßen Antriebstrang ausschnittsweise im Bereich der aus einem Drehschwingungsdämpfer und einer drehelastischen Kupplung zusammengebauten Baueinheit in einem vereinfachten achsnormalen Schnitt und

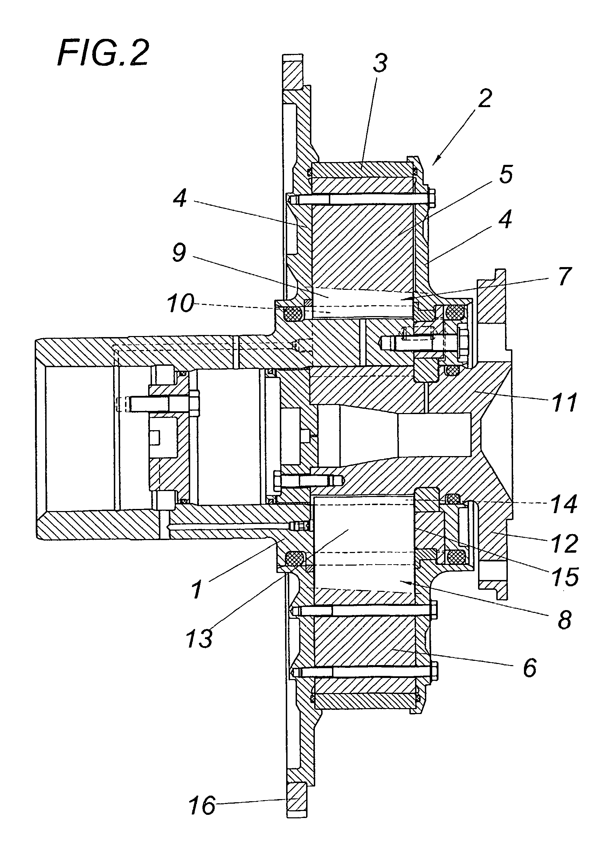

- Fig. 2: einen Schnitt nach der Linie II-II der Fig. 1 in einem kleineren Maßstab.

Gemäß dem dargestellten Ausführungsbeispiel weist die zwischen einer Antriebs- und einer Abtriebseite eines Antriebstranges einzubauende Baueinheit eine beispielsweise mit der Kurbelwelle eines Antriebes verbindbare Nabe auf, die den antriebseitigen, inneren Teil 1 eines Drehschwingungsdämpfers bildet, dessen abtriebseitiger, äußerer Teil mit 2 bezeichnet ist. Dieser auf dem inneren, antriebseitigen Teil 1 drehbar gelagerte äußere Teil 2 ist aus einem Spannring 3 und zwei Seitenplatten 4 zusammengesetzt, zwischen denen Zwischenstücke 5 und 6 angeordnet sind, die zwischen sich Kammern 7 und 8 bilden. In den Kammern 7 sind zwischen den Zwischenstücken 5 zu Blattfederpaketen zusammengefaßte radiale Blattfedern 9 eingespannt, die mit ihrem freien Ende in Axialnuten 10 eingreifen, so daß der äußere Teil 2 gegenüber dem inneren Teil 1 durch die Blattfedern 9 drehelastisch abgestützt wird. Die Kammern 7 sind mit einer Dämpfungsflüssigkeit, im allgemeinen Öl, gefüllt, die bei einer Relativdrehung zwischen dem inneren Teil 1 und dem äußeren Teil 2 zwischen den Kammern 7 über Drosselspalte verdrängt wird, die sich zwischen den Stützkörpern 5 und dem inneren Teil 1 ergeben. Über die Bemessung der Blattfedern 9 und der sich durch die Flüssigkeitsverdrängung zwischen den Kammern 7 ergebenden hydraulischen Dämpfung kann der Drehschwingungsdämpfer hinsichtlich seiner Drehsteifigkeit und seiner Relativdämpfung an die jeweiligen Anforderungen angepaßt werden.

Der äußere Teil 2 dient jedoch nicht nur als abtriebseitige Dämpfungsmasse eines Drehschwingungsdämpfers, sondern wirkt auch mit einem inneren, abtriebseitigen Teil 11 zur Bildung einer drehelastischen Kupplung zusammen, die mit einem am inneren Teil 11 vorgesehenen Anschlußflansch 12 an die Abtriebseite des Antriebstranges angeschlossen wird. Diese drehelastische Kupplung weist wiederum Blattfedern 13 zur Drehmomentübertragung zwischen dem äußeren Teil 2 und dem inneren Teil 11 auf, der zur Aufnahme der freien Enden der Blattfedern 13 Axialnuten 14 bildet. Die äußeren Enden der den inneren Teil 1 des Drehschwingungsdämpfers zumindest teilweise in Durchtrittsöffnungen 15 durchsetzenden, zu Blattfederpaketen zusammengesetzten Blattfedern 13 sind zwischen den Zwischenstücken 6 biegesteif eingespannt, so daß sich zwischen dem äußeren Teil 2 und dem inneren Teil 11, der innerhalb des Nabenkörpers des inneren Teiles 1 drehbar gelagert ist, eine drehelastische Verstellung ermöglicht wird, wobei zur Vergrößerung der Dämpfung wiederum die sich zwischen den Zwischenstücken 6 ergebenden, sich in die Durchtrittsöffnungen 15 fortsetzenden Kammern 8 mit einer Dämpfungsflüssigkeit gefüllt sind, die über Drosselspalte zwischen dem inneren Teil 11 und dem Nabenkörper des inneren Teiles 1 in Strömungsverbindung stehen. Die Drehsteifigkeit und die Relativdämpfung der sich zwischen dem äußeren Teil 2 und dem inneren Teil 11 ergebenden, drehelastischen Kupplung kann daher unabhängig vom Drehschwingungsdämpfer zwischen dem inneren Teil 1 und dem äußeren Teil 2 konstruktiv vorgegeben werden.

Da der äußere Teil 2 als Dämpfungsmasse sowohl dem eingangsseitigen Schwingungsdämpfer als auch der ausgangsseitigen drehelastischen Kupplung angehört, weist er ein vergleichsweise großes Massenträgheitsmoment auf, das durch einen Zahnkranz 16 auf der einen Seitenplatte 4 des äußeren Teiles 2 vergrößert wird. Dieser Zahnkranz 16 wird von einem Anlasser für den Antrieb angetrieben, wenn der Antriebsmotor gestartet wird. Aufgrund des vergleichsweise großen Massenträgheitsmomentes des äußeren Teiles 2 im Vergleich zum abtriebseitigen inneren Teil 11 der drehelastischen Kupplung kann im Zusammenhang mit einer entsprechenden Abstimmung der Drehsteifigkeit und der Relativdämpfung dieser Kupplung die Abtriebseite des Antriebstranges schwingungstechnisch weitgehend von der Antriebseite isoliert werden. Außerdem kann der äußere Teil 2 als Dämpfungsmasse zur Dämpfung der Drehschwingungen des antriebseitigen Antriebstranges vorteilhaft genützt werden, so daß durch die erfindungsgemäße Anordnung von drei konzentrischen Teilen 1, 2 und 11, zwischen denen einerseits ein Drehschwingungsdämpfer und anderseits eine drehelastische Kupplung gebildet wird, das Drehschwingungsverhalten des gesamten Antriebstranges verbessert und zugleich der bauliche Aufwand wesentlich verringert werden kann.

## Patentansprüche

1. Antriebstrang mit einem Drehschwingungsdämpfer und einer drehelastischen Kupplung, wobei der Drehschwingungsdämpfer eine gegenüber einem antriebseitigen Teil (1) federnd abgestützte abtriebseitige Dämpfungsmasse und die drehelastische Kupplung eine gegenüber einem abtriebseitigen Teil (11) federnd abgestützte antriebseitige Dämpfungsmasse aufweisen, und die drehelastische Kupplung und der Drehschwingungsdämpfer zu einer Baueinheit mit einer gemeinsamen, je für sich gegenüber dem antriebseitigen und dem abtriebseitigen Teil (1, 11) federnd abgestützten Dämpfungsmasse für den Drehschwingungsdämpfer und die drehelastische Kupplung zusammengebaut sind, **dadurch gekennzeichnet, daß** der antriebseitige Teil (1) des Drehschwingungsdämpfers und der abtriebseitige Teil (11) der drehelastischen Kupplung einen gemeinsamen Außen- oder Innenteil (2) als Dämpfungsmasse aufweisen, wobei der antriebseitige Teil (1) des Drehschwingungsdämpfers, der abtriebseitige Teil (11) der drehelastischen Kupplung und die gemeinsame Dämpfungsmasse drei konzentrisch angeordnete, durch radiale Blattfedern (9, 13) paarweise miteinander verbundene Teile (1, 2, 11) bilden, und die Blattfedern (13) zwischen dem äußersten und dem innersten Teil (2, 11) den mittleren Teil (1) in Durchtrittsöffnungen (15) durchsetzen.

2. Antriebstrang nach Anspruch 1, **dadurch gekennzeichnet, daß** der zwischen dem mittleren und dem äußersten, als Dämpfungsmasse dienenden Teil (1, 2) gebildete Drehschwingungsdämpfer über den mittleren Teil (1) mit der Antriebseite und die zwischen dem äußersten und dem innersten Teil (2, 11) vorgesehene Kupplung über den innersten Teil (11) mit der Abtriebseite des Antriebstranges verbunden sind.

## Claims

1. Driveline having a torsional vibration damper and a torsional elastic coupling wherein the torsional vibration damper comprises an output-side damping mass resiliently supported with respect to a drive-side part (1) and the torsional elastic coupling comprises a drive-side damping mass resiliently support with respect to an output-side part (11), and the torsional elastic coupling and the torsional vibration damper are brought together to form a unit with a common damping mass, respectively resiliently supported with respect to the drive-side and the output-side part (1, 11), for the torsional vibration damper and the torsional elastic coupling, **characterised in that** the drive-side part (1) of the torsional vibration damper and the output-side part (11) of the torsional elastic coupling comprise a common outer or inner part (2) as a damping mass, wherein the drive-side part (1) of the torsional vibration damper, the output-side part (11) of the torsional elastic coupling and the common damping mass form three concentrically arranged parts (1, 2, 11) connected to each other in pairs through radial leaf springs (9, 13) and the leaf springs (13) between the outermost and the innermost part (2, 11) go through the middle part (1) in passage openings (15).

2. Driveline according to claim 1, **characterised in that** the torsional vibration damper formed between the middle and the outermost part (1, 2) serving as a damping mass is connected via the middle part (1) to the drive side and the coupling disposed between the outermost and the innermost part (2, 11) is connected via the innermost part (11) to the output side of the driveline.

## Revendications

1. Ligne de transmission avec un amortisseur de vibrations de torsion et un accouplement torsio-élastique l'amortisseur de vibrations de torsion présentant une masse d'amortissement, située côté mené, soutenue élastiquement par rapport à une partie (1) située côté menant, et l'accouplement torsio-élastique présentant une masse d'amortissement, située côté menant , soutenue élastiquement par rapport à une partie (11), située côté mené, et l'accouplement torsio-élastique et l'amortisseur de vibrations de torsion étant groupés en un ensemble ayant une masse d'amortissement commune, soutenue élastiquement en soi par rapport à la partie située côté menant et la située partie côté mené (1, 11), pour l'amortisseur de vibrations de torsion et l'accouplement torsio-élastique, **caractérisée en ce que** la partie (1) située côté menant de l'amortisseur de vibrations de torsion et la partie (11) située côté mené de l'accouplement torsio-élastique présentent, en tant que masse d'amortissement, une partie extérieure ou intérieure (2) commune, sachant que la partie (1) située côté menant de l'amortisseur de vibrations de torsion, la partie (11) située côté mené de l'accouplement torsio-élastique et la masse commune forment trois parties (1, 2, 11) disposées concentriquement, reliées ensemble, par paires, au moyen de ressorts à lame (9, 13) radiaux, et les reports à lame (13) traversant la partie médiane (1), placés entre la partie la plus extérieure eL la partie la plus intérieure (2, 11), en passant dans des ouvertures de passage (15).

2. Ligne de transmission selon la revendication 1, **caractérisée en ce que** l'amortisseur de vibrations de torsion, formé entre la partie médiane et la partie la plus extérieure (1, 2), servant de masse d'amortissement, est relié à l'arbre d'entraînement par la partie médiane (1), et l'accouplement, prévu entre la partie la plus extérieure et la partie la plus intérieure (2, 11), est relié à l'arbre située côte mené de la ligne de transmission, par l'intermédiaire de la partie la plus intérieure (11).
